# EUROPEAN PATENT SPECIFICATION

(11) **EP 3 049 944 B1**
(45) Date of publication and mention of the grant of the patent: **12.01.2022**
(21) Application number: 13894418.6
(22) Date of filing: 26.09.2013
(51) Int. Cl.: G06F 12/02

(54) **BLOCK STORAGE APERTURES TO PERSISTENT MEMORY**
BLOCKSPEICHERÖFFNUNGEN ZU PERSISTENTEM SPEICHER
OUVERTURES DE STOCKAGE PAR BLOCS VERS UNE MÉMOIRE PERSISTANTE

(43) Date of publication of application: 03.08.2016
(73) Proprietor: Intel Corporation, Santa Clara, CA 95054 (US)
(72) Inventor: SCHMISSEUR, Mark A., Phoeniz, Arizona 85048 (US); RUDOFF, Andy M., Boulder, Colorado 80302 (US); NACHIMUTHU, Murugasamy, Hillsboro, Oregon 97124 (US); NATU, Mahesh S., Sunnyvale, California 94086 (US); MANGOLD, Richard P., Forest Grove, Oregon 97116 (US); STEWART, Douglas E., Windsor, Colorado 80550 (US)
(74) Representative: Rummler, Felix
(86) International application number: PCT/US2013/061841
(87) International publication number: WO 2015/047266

(56) References cited:
- JP-A- 2012 523 618
- KR-A- 20130 098 641
- US-A1- 2006 026 341
- US-A1- 2009 037 652
- US-A1- 2010 223 434
- US-A1- 2010 223 434
- US-A1- 2012 151 120
- US-A1- 2012 151 120
- None

## Description

### BACKGROUND

In a conventional computer system, a block storage device including non- volatile memory can be communicably coupled to a block storage device controller, which, in turn, can be communicably coupled to a processor by a system bus. Such a system bus is typically implemented as a Peripheral Component Interconnect express (PCIe) bus, allowing the processor to access block data storable within the block storage device by issuing one or more input/output (I/O) commands to the block storage device controller over the PCIe bus. Having received an I/O command from the processor over the PCIe bus, the block storage device controller can perform I/O processing including one or more direct memory access (DMA) operations to access the block data storable in the block storage device, and ultimately send a signal to the processor over the PCIe bus to signal completion of the I/O processing. However, such I/O processing performed by the block storage device controller in conjunction with the PCIe bus can cause latency in the processing of block write/read operations in such a conventional computer system.

US 2006/026341 A1 relates to virtual-to-physical address translation in a flash file system. It discloses A flash memory management system for a memory for accessing data from a host, the system including physical units and virtual units of the memory and a mapping mechanism of each virtual unit into one or more physical units, wherein the number of binary bits required for accessing each of the virtual units is less than the number of binary bits required for accessing each of the physical units.

### SUMMARY OF THE INVENTION

The present invention is defined by the features of the independent claims. Preferred embodiments thereof are defined by features of the dependent claims.

### BRIEF DESCRIPTION OF THE DRAWINGS

The accompanying drawings, which are incorporated in and constitute part of this specification, illustrate one or more embodiments described herein, and, together with the Detailed Description, explain these embodiments. In the drawings:
FIG. 1 is a block diagram illustrating an exemplary apparatus for accessing, in a computer system, at least one non-volatile memory (NVM) device, which, in conjunction with an NVM device controller, can be collectively viewed by the computer system as a block storage device, in accordance with the present application;
FIG. 2 is a block diagram illustrating the NVM device controller included in the apparatus of FIG. 1;
FIG. 3 is a block diagram illustrating an exemplary block window, a plurality of exemplary control registers, an exemplary address translation component, and an exemplary media management translation table included in the NVM device controller of FIG. 2;
FIG. 4 is a flow diagram illustrating an exemplary method of operating the NVM device controller of FIG. 2;
FIG. 5 is a block diagram of an exemplary computer system in which the NVM device controller of FIG. 2 may be employed;
FIG. 6a is a block diagram illustrating an exemplary alternative embodiment of the NVM device controller of FIG. 2, including an exemplary mailbox for use by a host processor in issuing and monitoring one or more commands, such as memory load/store commands, sent by the host processor to the NVM device controller over a memory bus;
FIG. 6b is a diagram illustrating an exemplary op-code format associated with a respective command, an exemplary write protect bit associated with the op-code format, and an exemplary input payload format for use by a host processor in issuing the respective command to an NVM device controller using the mailbox of FIG. 6a;
FIG. 6c is a diagram illustrating an exemplary status code format associated with a respective command, and an exemplary output payload format for use by a host processor in monitoring completion of the respective command using the mailbox of FIG. 6a; and
FIGS. 7a-7b depict a flow diagram illustrating an exemplary method of issuing a command to an NVM device controller over a memory bus, and monitoring a status of completion of the command by a host processor using the mailbox of FIG. 6a.

### DESCRIPTION OF EMBODIMENTS

Apparatus and methods are disclosed for accessing at least one non-volatile memory (NVM) device in a computer system that includes at least one host processor and at least one memory bus. In the disclosed apparatus and methods, the NVM device is communicably coupleable to the memory bus through an NVM device controller, thereby allowing the host processor to access persistent data storable within the NVM device by issuing one or more memory load/store commands to the NVM device controller over the memory bus. The computer system in conjunction with the host processor can implement a block storage driver, and the NVM device in conjunction with the NVM device controller can be collectively viewed by the computer system as a block storage device. Because the NVM device controller includes at least one block window (such a block window is also referred to herein as an "aperture") that defines at least one address range for accessing one or more blocks of the persistent data storable within the NVM device, the computer system can advantageously exploit, with reduced latency, the full capacity of the NVM device without being unduly constrained by physical addressing limits imposed by the host processor, or by limits imposed by an operating system (OS) executed by the host processor.

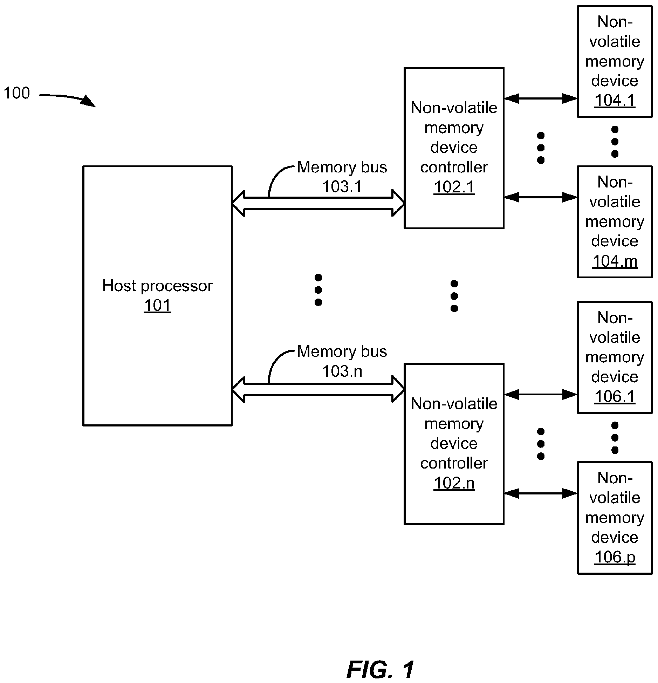

FIG. 1 depicts an illustrative embodiment of an exemplary apparatus 100 for accessing at least one NVM device in a computer system, in accordance with the present application. As shown in FIG. 1, the apparatus 100 includes a host processor 101, and one or more NVM device controllers 102.1-102.n (also referred to herein as "NVM controllers") communicably coupled to the host processor 101 by one or more memory buses 103.1-103.n, respectively. As further shown in FIG. 1, one or more NVM devices can be communicably coupled to each of the NVM controllers 102.1-102.n. For example, one or more NVM devices 104.1-104.m can be communicably coupled to the NVM controller 102.1, which, in turn, is communicably coupled to the host processor 101 via the memory bus 103.1. Likewise, one or more NVM devices 106.1-106.p can be communicably coupled to the NVM controller 102.n, which, in turn, is communicably coupled to the host processor 101 via the memory bus 103.n.

In the exemplary apparatus 100 of FIG. 1, the host processor 101 can be implemented using one or more processors, one or more multi-core processors, and/or any other suitable processor or processors. Further, each of the NVM devices 104.1-104.m, 106.1-106.p can include non-volatile memory (NVM) such as NAND or NOR flash memory that uses a single bit per memory cell, multi-level cell (MLC) memory, for example, NAND flash memory with two bits per cell, polymer memory, phase-change memory (PCM), nanowire-based charge-trapping memory, ferroelectric transistor random access memory (FeTRAM), 3-dimensional cross-point memory, non-volatile memory that uses memory resistor (memristor) technology, or any other suitable non-volatile memory, NVM device, or persistent data storage medium.

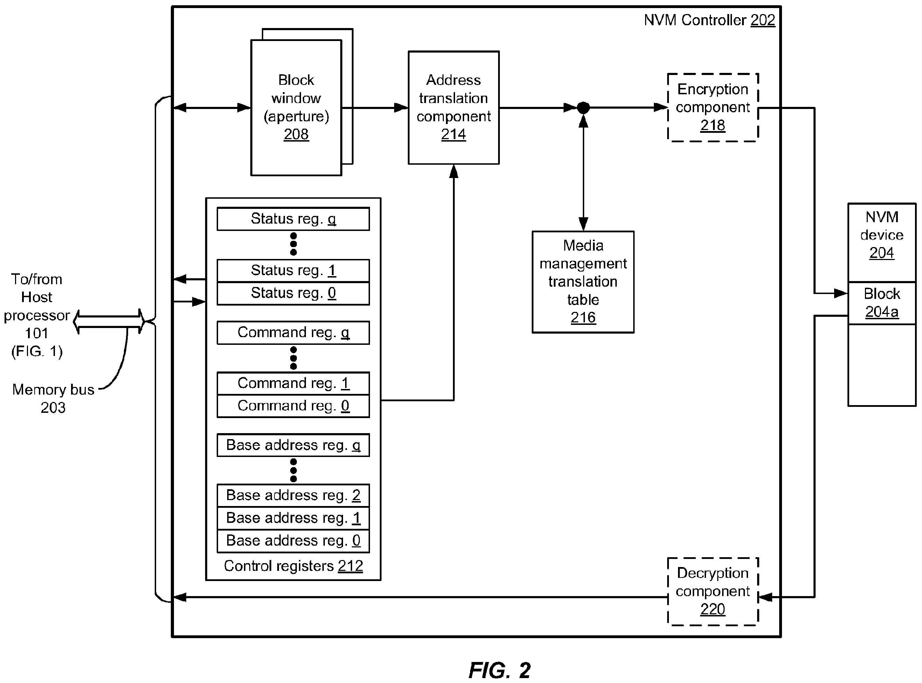

FIG. 2 depicts an exemplary NVM controller 202 that can be employed in the apparatus 100 of FIG. 1. As shown in FIG. 2, the NVM controller 202 includes at least one block window (aperture) 208, a plurality of control registers 212, an address translation component 214, a media management translation table 216, an optional encryption component 218, and an optional decryption component 220. As further shown in FIG. 2, an NVM device 204 is communicably coupled to the NVM controller 202, which, in turn, is communicably coupleable to the host processor 101 (see FIG. 1) via a memory bus 203.

In the exemplary NVM controller 202 of FIG. 2, the aperture 208 defines an address range for accessing one or more blocks of persistent data storable within the NVM device 204. The plurality of control registers 212 include a plurality of command registers 0-q, a plurality of status registers 0-q, and a plurality of memory-mapped base address registers 0-q containing a plurality logical base addresses, respectively. Each of the plurality of memory-mapped base address registers 0, 1, ..., q corresponds to a predetermined portion of the address range defined by the aperture 208. Further, the plurality of status registers 0-q are associated with the plurality of command registers 0-q, respectively, and the status register/command register pairs 0,0, 1,1, ..., q,q are, in turn, associated with the plurality of memory-mapped base address registers 0-q, respectively.

The address translation component 214 is operative to translate one or more logical addresses within the address range defined by the aperture 208 to actual physical addresses within a valid address range for a block write to (or a block read from) the NVM device 204, based at least on information provided by the host processor 101. The NVM controller 202 can employ the media management translation table 216 for performing wear-leveling operations and/or enforcing endurance limits for the NVM device 204 (*e.g.,* an NVM device including flash memory). The NVM controller 202 can further employ the encryption component 218 for encrypting block data to be written to the NVM device 204, as well as the decryption component 220 for decrypting block data to be read from the NVM device 204.

In an exemplary mode of operation, the host processor 101 (see FIG. 1) can access persistent data storable within the NVM device 204 (see FIG. 2) by issuing one or more memory load/store commands to the NVM controller 202 (see FIG. 2) over the memory bus 203 (see FIG. 2). In this exemplary mode of operation, the host processor 101 can configure the NVM controller 202 for performing a block write (BW) to the NVM device 204 by translating a specified BW address within its address space to a logical BW address within the address range defined by the aperture 208 (see FIG. 2). The logical BW address can be expressed in terms of a logical BW base address and a logical BW offset address. The host processor 101 can select an available aperture within the NVM controller 202 (such as the aperture 208) by addressing the respective aperture 208 directly over the memory bus 203.

Having configured the NVM controller 202 for performing the desired block write operation to the NVM device 204, the host processor 101 can issue a memory store command over the memory bus 203 to the NVM controller 202. The memory store command provides at least the logical BW base address and the logical BW offset address, which defines a relative offset from the logical BW base address. The host processor 101 writes the memory store command to a selected one of the plurality of command registers 0-q, based at least on the logical BW base/offset address provided via the memory store command. In response to the memory store command issued by the host processor 101, the NVM controller 202 selects the memory-mapped base address register 0, 1, ..., q associated with the status register/command register pair 0,0, 1,1, ..., q,q that includes the selected command register 0, 1, ..., q. Further, the NVM controller 202 receives block data to be written to the NVM device 204 at the relative offset from the logical BW base address within the address range of the aperture 208,

The address translation component 214 (see FIG. 2) within the NVM controller 202 receives the logical base address contained in the selected base address register 0, 1, ..., q, receives the block data received at the relative offset from the logical BW base address within the address range of the aperture 208, and translates the logical base address and the logical BW offset address to an actual physical address of a block (*e.g.,* the block 204a) within the NVM device 204. The NVM controller 202 can check the translated address to determine whether it conforms to a valid address range for a block write to the NVM device 204. In the event the translated address does not conform to a valid address range for a block write to the NVM device 204, the NVM controller 202 can set an error flag in the status register 0, 1 ..., q associated with the selected command register 0, 1, ..., q. In the event the translated address conforms to a valid address range for a block write to the NVM device 204, the NVM controller 202 is successfully configured for performing the desired block write operation to the NVM device 204.

The NVM controller 202 can employ the media management translation table 216 to perform wear-leveling operations, and to enforce endurance limits for the NVM device 204, as desired and/or required. The NVM controller 202 can further employ the encryption component 218 to encrypt the block data to be written to the block 204a of the NVM device 204, as desired and/or required. The NVM controller 202 can then write the block data to the actual physical address of the block 204a. At the completion of the block write to the NVM device 204, the host processor 101 can read, over the memory bus 203, the status register 0, 1, ..., q associated with the selected command register 0, 1, ..., q to check the error status of the block write operation.

In this exemplary mode of operation, the host processor 101 (see FIG. 1) can further configure the NVM controller 202 (see FIG. 2) for performing a block read (BR) from the NVM device 204 (see FIG. 2) by translating a specified BR address within its address space to a logical BR address within the address range defined by the aperture 208. The logical BR address can be expressed in terms of a logical BR base address and a logical BR offset address. As described herein with reference to the block write operation, the host processor 101 can select an available aperture within the NVM controller 202 (such as the aperture 208) by addressing the respective aperture 208 directly over the memory bus 203.

Having configured the NVM controller 202 for performing the desired block read operation from the NVM device 204, the host processor 101 can issue a memory load command over the memory bus 203 to the NVM controller 202. The memory load command provides at least the logical BR base address and the logical BR offset address, which defines a relative offset from the logical BR base address. The host processor 101 writes the memory load command to a selected one of the plurality of command registers 0-q, based at least on the logical BR base/offset address provided via the memory load command. In response to the memory load command issued by the host processor 101, the NVM controller 202 selects the memory-mapped base address register 0, 1, ..., q associated with the status register/command register pair 0,0, 1,1, ..., q,q that includes the selected command register 0, 1, ..., q.

The address translation component 214 receives the logical base address from the selected base address register 0, 1, ..., q, receives the logical BR offset address provided via the memory load command, and translates the logical base address and logical BR offset address to an actual physical address of a block (*e.g.,* the block 204a) within the NVM device 204. The NVM controller 202 can check the translated address to determine whether it conforms to a valid address range for a block read from the NVM device 204. In the event the translated address does not conform to a valid address range for a block read from the NVM device 204, the NVM controller 202 can set an error flag in the status register 0, 1, ..., q associated with the selected command register 0, 1, ..., q. In the event the translated address conforms to a valid address range for a block read from the NVM device 204, the NVM controller 202 is successfully configured for performing the desired block read operation from the NVM device 204.

The NVM controller 202 can employ the decryption component 220 to decrypt the block data to be read from the block 204a of the NVM device 204, as desired and/or required. The NVM controller 202 can then read the block data from the actual physical address of the block 204a. At the completion of the block read from the NVM device 204, the host processor 101 can read, over the memory bus 203, the status register 0, 1, ..., q associated with the selected command register 0, 1, ..., q to check the error status of the block read operation.

By allowing the host processor 101 to access persistent data storable within the NVM device 204 by issuing one or more memory load/store commands to the NVM controller 202 over the memory bus 203, in which the NVM controller 202 includes the aperture 208 that defines an address range for accessing one or more blocks of the persistent data storable within the NVM device 204, a computer system can advantageously exploit, with reduced latency, the full capacity of the NVM device 204 without being unduly constrained by physical addressing limits of the host processor 101, or by limits imposed by the OS executed by the host processor 101.

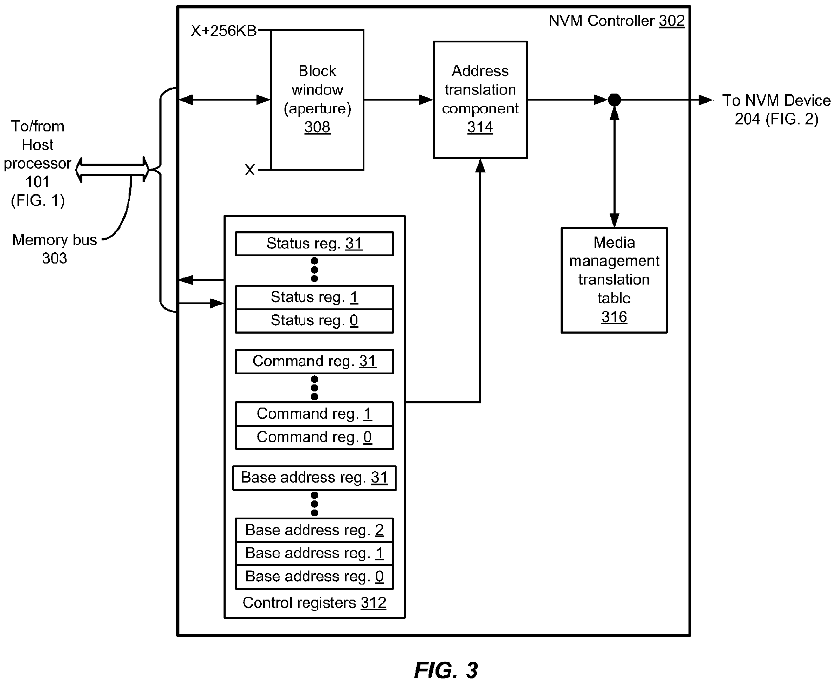

The operation of an NVM controller for translating one or more logical addresses within an address range defined by an aperture to actual physical addresses of one or more blocks within an NVM device will be further understood with reference to the following illustrative example and FIG. 3. As shown in FIG. 3, an NVM controller 302 a block window (aperture) 308, a plurality of control registers 312 including a plurality of command registers 0-31, a plurality of status registers 0-31, and a plurality of memory-mapped base address registers 0-31 containing a plurality logical base addresses, respectively, an address translation component 314, and a media management translation table 316. Each of the plurality of memory-mapped base address registers 0, 1, ..., 31 corresponds to a predetermined portion of the address range defined by the aperture 308. Further, the plurality of status registers 0-31 are associated with the plurality of command registers 0-31, respectively, and the status register/command register pairs 0,0, 1,1, ..., 31,31 are, in turn, associated with the plurality of memory-mapped base address registers 0-31, respectively.

In this illustrative example, the aperture 308 is configured to support a block size of 256 kilobytes (KB). It is noted, however, that the aperture 308 may alternatively be configured to support a block size of 16KB, 64KB, 128KB, 512KB, 1 megabyte (MB), 2MB, 4MB, or any other suitable block size. Each sub-block within the block size of 256KB is defined herein as 1/32 of the block size of 256KB (*i.e.,* 8KB), or any other suitable sub-block size. Each of the plurality of memory-mapped base address registers 0-31 is therefore configured to correspond to 8KB of the address range (*i.e*., 0-256KB) defined by the aperture 308. Specifically, the base address register 0 is configured to contain a 0^{th} logical base address covering 0-8KB of the address range defined by the aperture 308, the base address register 1 is configured to contain a 1^{st} logical base address covering 8-16KB of the address range defined by the aperture 308, the base address register 2 is configured to contain a 2^{nd} logical base address covering 16-24KB of the address range defined by the aperture 308, and so on up to the base address register 31, which is configured to contain a 31^{st} logical base address covering 248-256KB of the address range defined by the aperture 308.

With reference to this illustrative example, a memory load/store command issued by the host processor 101 (see FIG. 1) to the NVM controller 302 (see FIG. 3) over a memory bus 303 (see FIG. 3) can provide a logical base address and a logical offset address for use in writing block data to, or reading block data from, a block within the NVM device 204 (see FIG. 2). Such a logical base address can be represented by the logical base address "X", and therefore the address range defined by the aperture 308 can be expressed as ranging from the logical base address X to the logical address X+256KB (see FIG. 3). Further, an exemplary relative offset from the logical base address X can be expressed as "8KB" (plus a cache line offset, if any), or any other suitable relative offset. Such a cache line can correspond to 64 bytes (B), or any other suitable number of bytes.

For example, the host processor 101 can configure the NVM controller 302 for performing a block write (BW) to the NVM device 204 by issuing an exemplary command that conforms to the following format:
Store 0x0000 1200 0008 1000 to 0x8804 1000, in which "0x0000 1200 0008 1000" corresponds to the block address that is to be accessed through the aperture 308, "0x8804 0000" corresponds to the base address of the command registers 0-31, and "0x1000" is the offset corresponding to the command register 1, which is associated with the base address register 1. The host processor 101 can then access the block address by issuing one or more memory load/store commands, specifying one or more accesses to the following:
0x0000 0000 4800 2000, in which "0x0000 0000 4800 0000" corresponds to the logical base address "X" of the aperture 308, and "0x2000" corresponds to the 1^{st} logical base address contained in the base address register 1. As noted above, in this illustrative example, the 1^{st} logical base address, namely, 0x2000, covers 8-16KB of the address range defined by the aperture 308.

Accordingly, the memory load/store command issued by the host processor 101 to the NVM controller 302 over the memory bus 303 can provide a logical base/offset address that can be represented by the term "X+8KB" (plus a cache line offset, if any), which conforms to the address range, "X" to "X+256KB", defined by the aperture 308, The host processor 101 can write the memory load/store command to a selected one of the plurality of command registers 0-31, *e.g.,* the command register 1, based at least on the logical base/offset address, X+8KB (plus a cache line offset, if any), provided via the memory load/store command.

The address translation component 314 receives the 1^{st} logical base address from the selected base address register 1, receives an indication of the cache line offset, if any, from the aperture 308, and translates the 1^{st} logical base address and the cache line offset, if any, to the actual physical address of the block within the NVM device 204. The NVM controller 302 can then write the block data to, or read the block data from, the actual physical address of the respective block.

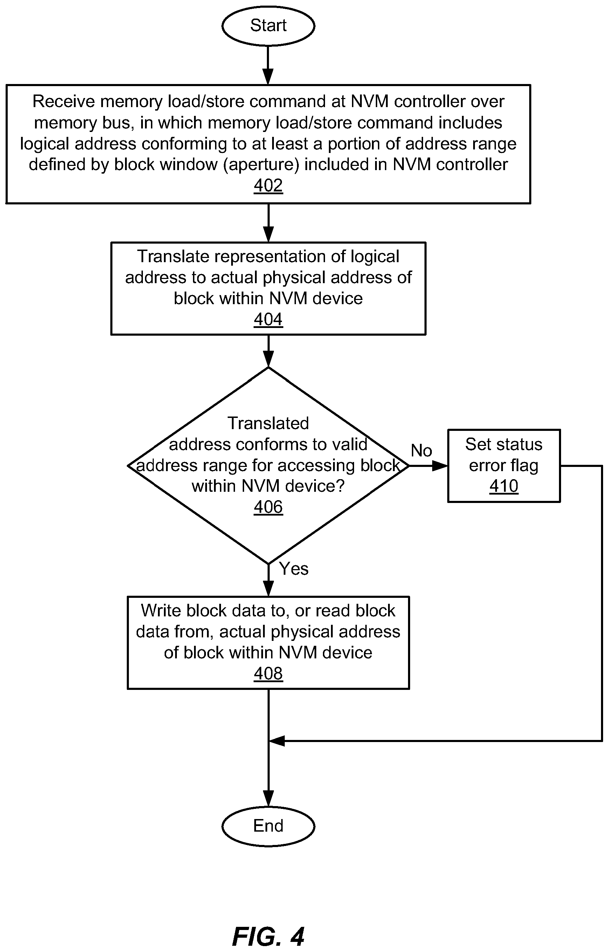

An exemplary method of operating an NVM controller for writing block data to, or reading block data from, one or more blocks within NVM device is described below with reference to FIG. 4. As depicted in block 402, a memory load/store command is received at the NVM controller over a memory bus, in which the memory load/store command includes a logical address conforming to at least a portion of an address range defined by a block window (aperture) included in the NVM controller. As depicted in block 404, a representation of the logical address is translated to an actual physical address of the block within the NVM device. As depicted in block 406, a determination is made as to whether the translated address conforms to a valid address range for accessing the block within the NVM device. In the event the translated address conforms to a valid address range for accessing the block within the NVM device, the block data is written to, or read from, the actual physical address of the block within the NVM device, as depicted in block 408. Otherwise, a status error flag is set, as depicted in block 410, and the exemplary method of operating the NVM controller ends.

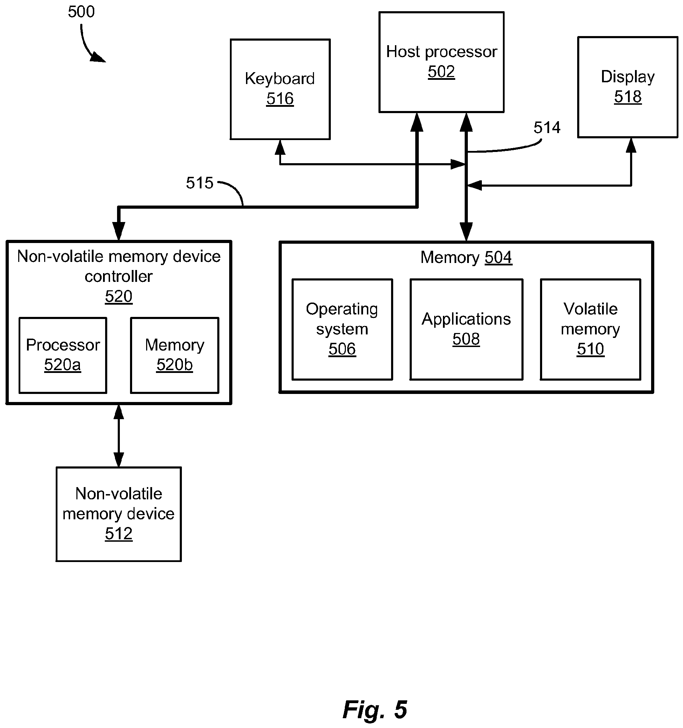

FIG. 5 depicts an exemplary computer system 500 that can be configured to implement apparatus and methods of the claimed invention. As shown in FIG. 5, the computer system 500 can include at least one host processor 502 communicably coupled to at least one memory 504 by a system bus 514, and communicably coupled to an NVM device controller 520 by a memory bus 515. The computer system 500 can further include a keyboard 516 and a display 518 communicably coupled to the system bus 514, and at least one NVM device 512 communicably coupled to the NVM device controller 520. The NVM device controller 520 includes at least one processor 520a operative to execute at least one program out of at least one non-transitory storage medium, such as a memory 520b or any other suitable storage medium, to access persistent data storable in one or more blocks within the NVM device 512. The host processor 502 is operative to execute instructions stored on at least one non-transitory storage medium, such as the memory 504 or any other suitable storage medium, for performing various processes within the computer system 500, including one or more processes for controlling operations of the NVM device controller 520 The memory 504 can include one or more memory components such as a volatile memory 510, which may be implemented as dynamic random access memory (DRAM) or any other suitable volatile memory. The memory 504 can also be configured to store an operating system (OS) 506 executable by the host processor 502, as well as one or more applications 508 that may be run by the OS 506. In response to a request generated by one of the applications 508, the host processor 502 can execute the OS 506 to perform desired data write/read operations on the volatile memory 510, and/or desired block write/read operations on the NVM device 512 via the NVM device controller 520.

It is noted that FIG. 5 illustrates an exemplary embodiment of the computer system 500, and that other embodiments of the computer system 500 may include more apparatus components, or fewer apparatus components, than the apparatus components illustrated in FIG. 5. Further, the apparatus components may be arranged differently than as illustrated in FIG. 5. For example, in some embodiments, the NVM device 512 may be located at a remote site accessible to the computer system 500 via the Internet or any other suitable network. In addition, functions performed by various apparatus components contained in other embodiments of the computer system 500 may be distributed among the respective components differently than as described herein.

Having described the above exemplary embodiments of the disclosed apparatus and methods, other alternative embodiments or variations may be made. For example, it was described herein that an NVM device controller can include at least one block window (aperture) that defines at least one address range for accessing persistent data storable in one or more blocks within an NVM device. In an alternative embodiment, such an aperture can be implemented as a block window for reading block data from the NVM device, a block window for writing block data to the NVM device, and/or a write combining buffer for writing data to the NVM device with atomic write support.

It was also described herein that an NVM device controller can be configured to perform a block write operation to an NVM device by translating a logical block write address within an address range defined by an aperture to an actual physical address of a block within the NVM device. In an alternative embodiment, such a block write operation can be performed to copy data from volatile memory, such as dynamic random access memory (DRAM), to the NVM device over a memory bus with reduced latency.

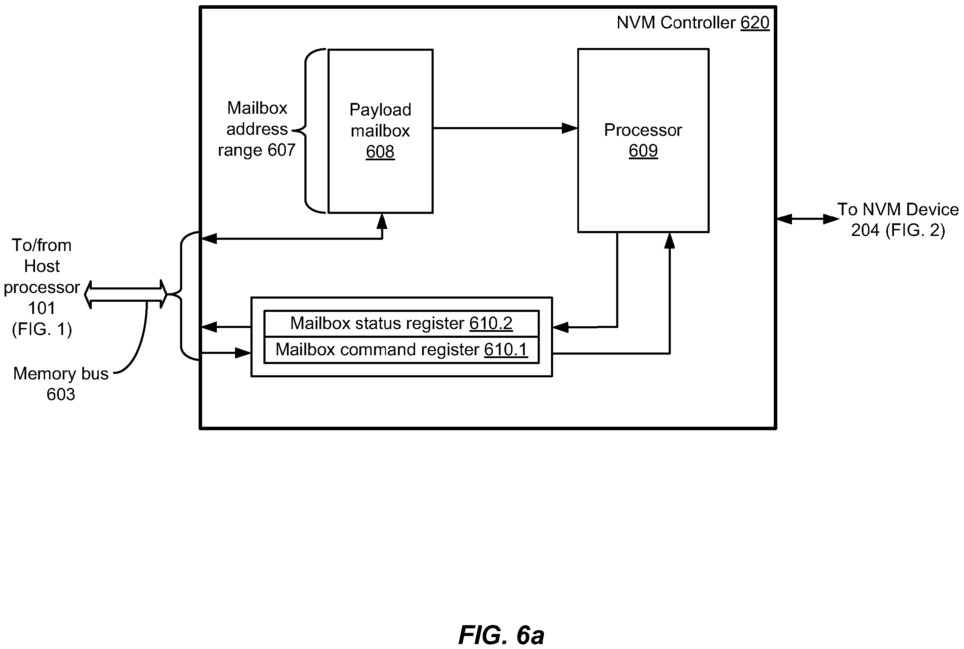

It was further described herein that a host processor could access persistent data storable within an NVM device by issuing one or more memory load/store commands to an NVM device controller over a memory bus. As depicted in FIG. 6a, in one embodiment, such an NVM device controller 620 can include a processor 609, as well as at least one payload data storage 608 (also referred to herein as a/the "payload mailbox"), at least one command register 610.1, and at least one status register 610.2, which collectively can be employed to provide a cacheable, bidirectional, memory-mapped access path between the host processor 101 (see FIG. 1) and the NVM device controller 620 over a memory bus 603. For example, the NVM device controller 620 can be incorporated in a DIMM, a double data rate (DDR) DIMM, and/or a non-volatile (NV) DIMM. In this embodiment, the host processor 101 can issue commands and access payload data and status information (*e.g.,* the status of command execution) over the memory bus 603 via a command interface, which is implemented in the NVM device controller 620 by the command register 610.1 (also referred to herein as the "mailbox command register"), the status register 610.2 (also referred to herein as the "mailbox status register"), and at least one address range 607 (also referred to herein as the "mailbox address range") defined by the payload mailbox 608. The host processor 101 can issue such commands, as well as access such payload data and status information, via such a command interface using cacheable memory load/store commands issued in-band over the bidirectional access path implemented by the memory bus 603, which is configured to support slave operations performed by the NVM device controller 620.

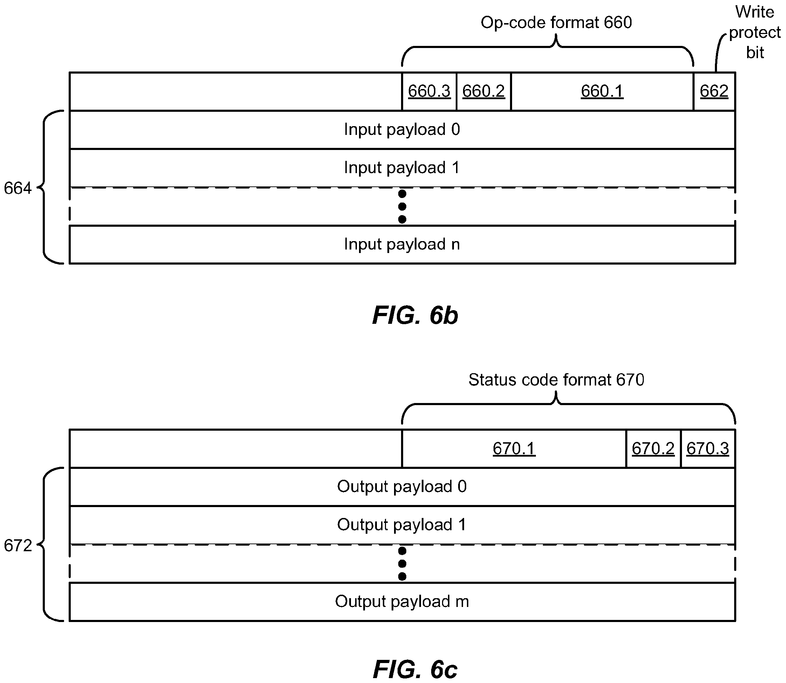

FIG. 6b depicts an exemplary op-code format 660 associated with a respective memory load/store command, an exemplary write protect bit 662 associated with the respective memory load/store command, and an exemplary input payload format 664 for use by the host processor 101 (see FIG. 1) in issuing the respective memory load/store command, using the mailbox command register 610.1 and the mailbox address range 607 of FIG. 6a. As shown in FIG. 6b, the op-code format 660 can include a command code 660.1 (*e.g.,* memory load command, memory store command), a payload type 660.2 (*e.g.,* small payload, large payload), and an interrupt type 660.3 (*e.g.,* low priority, high priority).

FIG. 6c depicts an exemplary status code format 670 associated with a respective memory load/store command, and an exemplary output payload format 672 for use by the host processor 101 (see FIG. 1) in monitoring completion of the execution of the respective memory load/store command, using the mailbox status register 610.2 and the mailbox address range 607 of FIG. 6a. As shown in FIG. 6c, the status code format 670 can include a status code 670.1 (*e.g.*, command failure status code, command success results, error status), a command progress status 670.2 (*e.g.*, command has started, command has completed, command is aborted), and a command success/failure status 670.3 (*e.g.*, command was successful, command has failed, error flag).

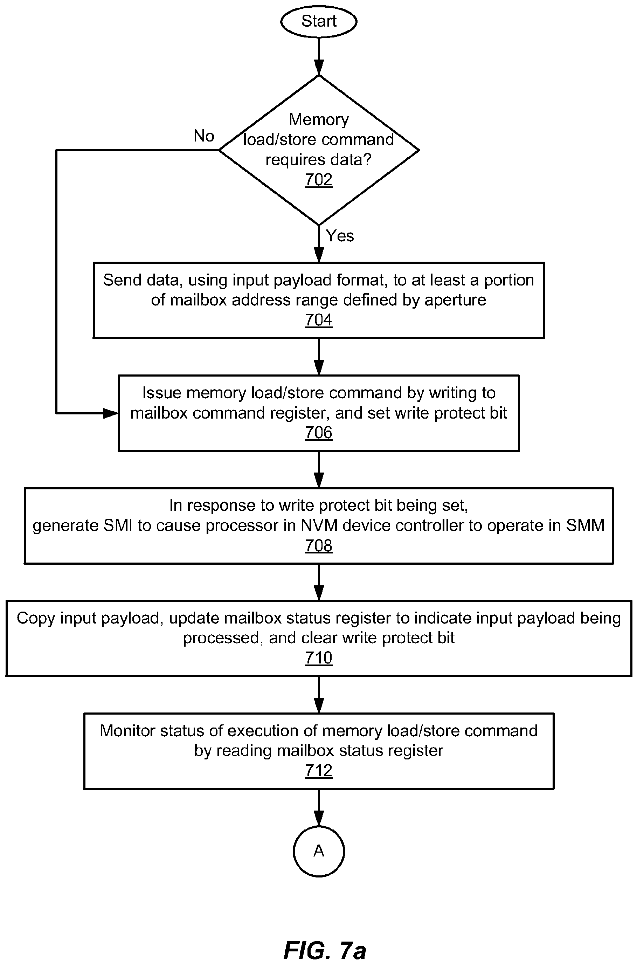

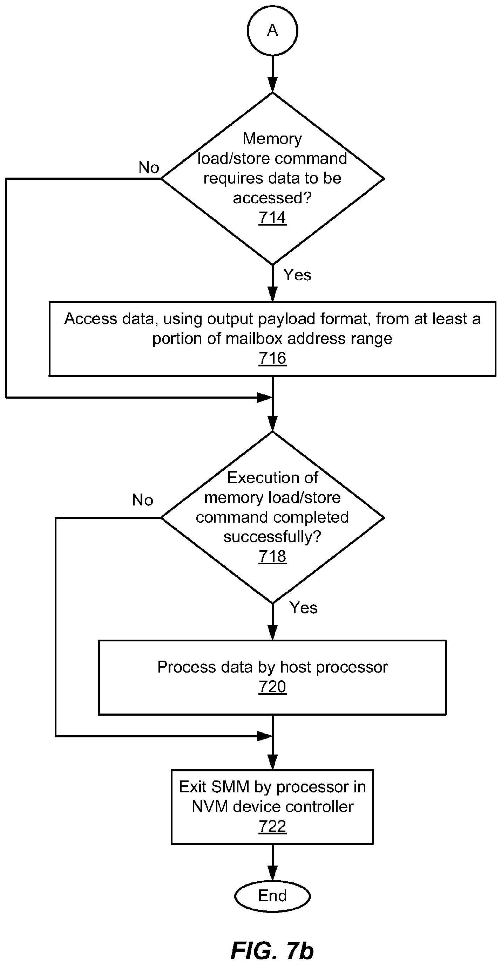

An exemplary method of issuing a memory load/store command and monitoring completion of the memory load/store command, by a host processor using a mailbox, is described below with reference to FIGS. 7a-7b, as well as FIGS. 6a-6c. In one embodiment, this exemplary method may be initiated by a system management interrupt (SMI), and may therefore be implemented in a system management mode (SMM) as an OS independent mechanism.

As depicted in block 702 (see FIG. 7a), a determination is made, by the host processor 101, as to whether the memory load/store command to be issued by the host processor 101 requires data (e.g., block data) to be sent to the NVM device controller 620. In the event the memory load/store command requires data to be sent to the NVM controller 620, such data is sent, by the host processor 101 over the memory bus 603 using the input payload format 664, to at least a portion of the mailbox address range 607 defined by the payload mailbox 608, as depicted in block 704. As depicted in block 706, the memory load/store command is issued, by the host processor 101 over the memory bus 603 using the op-code format 660, to the NVM device controller 620, by writing the memory load/store command to the mailbox command register 610.1. As further depicted in block 706, the write protect bit 662 is set, by the host processor 101, to conform to a predetermined logic level *(e.g.,* the write protect bit 662 may be set to a logical high level). As depicted in block 708, in response to the write protect bit 662 being set to a logical high level by the host processor 101, an SMI is generated by the NVM device controller 620 and subsequently handled by the SMM of the processor 609. For example, the SMM may be embodied as one or more basic input/output system (BIOS) services of the processor 609. It is noted that, once the write protect bit 662 is set by the host processor 101, the NVM device controller 620 write-protects one or more registers for the input payload from being further written to by the host processor 101.

While the NVM device controller 620 executes the memory load/store command, the input payload is copied by the NVM device controller 620 to its internal memory, the mailbox status register 610.2 is updated by the NVM device controller 620 using the status code format 670 to indicate that the input payload is being processed *(e.g.,* the command progress status 670.2 indicates that the command has started), and the write protect bit 662 is cleared by the NVM device controller 620, as depicted in block 710. It is noted that, once the write protect bit 662 is cleared by the NVM device controller 620, the input payload register(s) are no longer write-protected from being written to by the host processor 101, thereby allowing the host processor 101 to issue another command, over the memory bus 603 to the NVM device controller 620 using the op-code format 660, before the execution of the current command has completed.

As depicted in block 712, the status of the execution of the memory load/store command is monitored by the host processor 101 by reading the mailbox status register 610.2, using the status code format 670. In the event the mailbox status register 610.2 has been updated by the NVM device controller 620 to indicate that the execution of the memory load/store command has completed *(e.g.,* the command progress status 670.2 indicates that the command has completed), a determination is made, by the host processor 101 using the output payload format 672, as to whether the memory load/store command requires data (e.g., block data) to be accessed from the NVM device 204 via the NVM device controller 620, as depicted in block 714. In the event the memory load/store command requires data to be accessed by the host processor 101 via the NVM device controller 620, such data is accessed, by the host processor 101 over the memory bus 603 using the output payload format 672, from at least a portion of the mailbox address range 607 defined by the payload mailbox 608, as depicted in block 716. As depicted in block 718, a determination is made, by the host processor 101, as to whether the execution of the memory load/store command has completed successfully (*e.g.*, the command progress status 670.2 indicates that the command was successful). In the event the memory load/store command has completed successfully, the data accessed using the output payload format 672 is processed by the host processor 101, as depicted in block 720. As depicted in block 722, upon completion of the processing of the data by the host processor 101, the processor 609 within the NVM device controller 620 exits the SMM.

It is noted that the term "operative to", as employed herein, means that a corresponding device, system, apparatus, *etc.,* is able to operate, or is adapted to operate, for its desired functionality when the device, system, or apparatus is in its powered-on state. Moreover, various embodiments of the disclosed subject matter may be implemented in hardware, firmware, software, or some combination thereof, and may be described by reference to, or in conjunction with, program code such as instructions, functions, procedures, data structures, logic, application programs, design representations, and/or formats for simulation, emulation, and/or fabrication of a design, which when accessed by a machine results in the machine performing tasks, defining abstract data types or low-level hardware contexts, or producing a result.

It is further noted that the techniques illustrated in the drawing figures can be implemented using code and/or data stored and/or executed on one or more computing devices, such as general-purpose computers or computing devices. Such computers or computing devices store and communicate code and/or data (internally and/or with other computing devices over a network) using machine-readable media such as machine readable storage media (*e.g*., magnetic disks, optical disks, random access memory (RAM), read only memory (ROM), flash memory devices, phase-change memory) and machine readable communication media (*e.g.*, electrical, optical, acoustical, or other form of propagated signals such as carrier waves, infrared signals, digital signals, *etc.*)*.*

## Claims

1. A method of accessing block data storable within a non-volatile memory - NVM - device (204) in a computer system, the computer system including at least one host processor (101) and at least one memory bus (203), the method comprising:
receiving, at a controller (202) over the memory bus, at least one first command from the host processor, the first command including a memory store command, the first command further including a logical address, the controller including at least one block window (208) defining at least one address range for accessing the block data storable within the NVM device;
translating, by the controller, the logical address included in the first command to a physical address within the NVM device, the logical address conforming to at least a portion of the address range defined by the block window (208); and
accessing, by the controller, the block data at the physical address within the NVM device,
wherein the controller further includes at least one command register associated with the at least one block window (208), and wherein the receiving of the at least one first command from the host processor includes receiving the first command at the command register associated with the block window (208),
**characterized in that** the logical address includes a logical block write base address, and a logical block write offset address defining a relative offset from the logical block write base address, wherein the controller further includes a plurality of base address registers (0-q) containing a plurality of logical base addresses, respectively, each of the plurality of logical base addresses corresponding to a predetermined portion of the address range defined by the block window (208), and wherein the method further comprises:
in response to the memory store command, selecting one of the plurality of base address registers based at least on one or more of the logical block write base address and the logical block write offset address included in the memory store command
receiving, at the controller over the memory bus, the block data at the relative offset from the logical block write base address within the address range of the block window (208). wherein the controller further includes an address translation component (214), and wherein the translating of the logical address to the physical address within the NVM device includes translating, by the address translation component, the logical base address contained in the selected base address register and the logical block write offset address to the physical address within the NVM device.

2. A controller (202) for accessing block data storable within a non-volatile memory - NVM - device (204), the controller being communicably coupleable to at least one host processor (101) over at least one memory bus (203), comprising:
at least one block window (208) defining at least one address range for accessing the block data storable within the NVM device;
at least one command register (0-q) associated with the at least one block window (208), the command register being operative to: receive, over the memory bus, at least one first command from the host processor, the first command including a memory store command, **characterized in** the first command
having a logical address including a logical base address and a logical offset address
defining a relative offset from the logical block write base address, and wherein the controller is configured to
receive, over the memory bus, the block data at the relative offset from the logical block write base address within the address range of the block window (208);
a plurality of control registers (212) including at least a plurality of base address registers (0-q), the plurality of base address registers containing a plurality of logical base addresses, respectively, each of the respective logical base addresses corresponding to a predetermined portion of the address range defined by the block window (208); and
at least one internal processor (520a) operative to execute at least one program out of at least one memory (520b):
in response to the memory store command, to select one of the plurality of base address registers based at least on one or more of the logical block write base address and the logical block write offset address included in the memory store command;
to translate the logical base address contained in the selected base address register and the logical offset address to a physical address within the NVM device ; and
to access the block data at the physical address within the NVM device.

3. The controller of claim 2 wherein the block window (208) is configured to support a predetermined block size, and wherein the respective logical base addresses are each configured to cover a predetermined sub-block within the block window (208).

4. The controller of claim 2 or 3 wherein the first command includes the memory store command, and wherein the at least one internal processor is further operative to execute the at least one program out of the at least one memory to write the block data to the physical address within the NVM device.

5. The controller of claim 2, 3, or 4 wherein the first command includes the memory load command, and wherein the at least one internal processor is further operative to execute the at least one program out of the at least one memory to read the block data from the physical address within the NVM device.

6. A computer system (500), comprising:
a system bus (514);
a display (518) communicably coupled to the system bus;
at least one volatile memory (510) coupled to the system bus; and
the controller of claim 2 communicably coupled to the memory bus.

7. A computer-readable storage medium including executable instructions for accessing block data storable within a non-volatile memory - NVM - device (204) in a computer system, the computer system including at least one host processor (101) and at least one memory bus (203), the computer-readable storage medium comprising executable instructions to execute the method of claim 1.

## Patentansprüche

1. Verfahren zum Zugreifen auf Blockdaten, die in einer nicht flüchtigen Speichervorrichtung - NVM-Vorrichtung - (204) in einem Computersystem gespeichert werden können, wobei das Computersystem mindestens einen Host-Prozessor (101) und mindestens einen Speicherbus (203) enthält, wobei das Verfahren Folgendes umfasst:
Empfangen an einer Steuereinheit (202) über den Speicherbus mindestens eines ersten Befehls von dem Host-Prozessor, wobei der erste Befehl einen Speicherbefehl enthält, wobei der erste Befehl ferner eine logische Adresse enthält, wobei die Steuereinheit mindestens ein Blockfenster (208) enthält, das mindestens einen Adressenbereich zum Zugreifen auf die Blockdaten, die in der NVM-Vorrichtung gespeichert werden können, definiert;
Übersetzen durch die Steuereinheit der logischen Adresse, die in dem ersten Befehl enthalten ist, in eine physikalische Adresse innerhalb der NVM-Vorrichtung, wobei die logische Adresse mindestens einem Teil des durch das Blockfenster (208) definierten Adressenbereichs entspricht; und
Zugreifen durch die Steuereinheit auf die Blockdaten an der physikalischen Adresse innerhalb der NVM-Vorrichtung,
wobei die Steuereinheit ferner mindestens ein Befehlsregister enthält, das dem mindestens einen Blockfenster (208) zugeordnet ist, und wobei das Empfangen des mindestens einen ersten Befehls von dem Host-Prozessor enthält, den ersten Befehl an dem Befehlsregister zu empfangen, das dem Blockfenster (208) zugeordnet ist,
**dadurch gekennzeichnet, dass**
die logische Adresse eine logische Blockschreibbasisadresse und eine logische Blockschreibversatzadresse, die einen relativen Versatz von der logischen Blockschreibbasisadresse definiert, enthält, wobei die Steuereinheit ferner mehrere Basisadressenregister (0-q) enthält, die jeweils mehrere logische Basisadressen enthalten, wobei jede der mehreren logischen Basisadressen einem vorgegebenen Teil des durch das Blockfenster (208) definierten Adressenbereichs entspricht und wobei das Verfahren ferner Folgendes umfasst:
als Reaktion auf den Speicherbefehl Auswählen eines der mehreren Basisadressenregister zumindest anhand einer oder mehrerer der logischen Blockschreibbasisadresse und der logischen Blockschreibversatzadresse, die in dem Speicherbefehl enthalten sind,
Empfangen an der Steuereinheit über den Speicherbus der Blockdaten an dem relativen Versatz von der logischen Blockschreibbasisadresse innerhalb des Adressenbereichs des Blockfensters (208),
wobei die Steuereinheit ferner eine Adressenübersetzungskomponente (214) enthält und wobei das Übersetzen der logischen Adresse in die physikalische Adresse innerhalb der NVM-Vorrichtung enthält, durch die Adressenübersetzungskomponente die logische Basisadresse, die in dem ausgewählten Basisadressenregister enthalten ist, und die logische Blockschreibversatzadresse in die physikalische Adresse innerhalb der NVM-Vorrichtung zu übersetzen.

2. Steuereinheit (202) zum Zugreifen auf Blockdaten, die in einer nicht flüchtigen Speichervorrichtung - NVM-Vorrichtung - (204) gespeichert werden können, wobei die Steuereinheit an mindestens einen Host-Prozessor (101) über mindestens einen Speicherbus (203) kommunikationstechnisch koppelbar ist, die Folgendes umfasst:
mindestens ein Blockfenster (208), das mindestens einen Adressenbereich zum Zugreifen auf Blockdaten, die in der NVM-Vorrichtung gespeichert werden können, definiert;
mindestens ein Befehlsregister (0-q), das dem mindestens einen Blockfenster (208) zugeordnet ist, wobei das Befehlsregister betreibbar ist zum:
Empfangen über den Speicherbus mindestens eines ersten Befehls von dem Host-Prozessor, wobei der erste Befehl einen Speicherbefehl enthält, **dadurch gekennzeichnet, dass** der erste Befehl eine logische Adresse besitzt, die eine logische Basisadresse und eine logische Versatzadresse, die einen relativen Versatz von der logischen Blockschreibbasisadresse definiert, enthält, und wobei die Steuereinheit konfiguriert ist zum:
Empfangen über den Speicherbus der Blockdaten an dem relativen Versatz von der logischen Blockschreibbasisadresse innerhalb des Adressenbereichs des Blockfensters (208),
mehrere Steuerregister (212), die zumindest mehrere Basisadressenregister (0-q) enthalten, wobei die mehreren Basisadressenregister jeweils mehrere logische Basisadressen enthalten, wobei jede der jeweiligen logischen Basisadressen einem vorgegebenen Teil des durch das Blockfenster (208) definierten Adressenbereichs entspricht; und
mindestens einen internen Prozessor (520a), der betreibbar ist, mindestens ein Programm aus mindestens einem Speicher (520b) auszuführen:
als Reaktion auf den Speicherbefehl, eines der mehreren Basisadressenregister anhand mindestens einer oder mehrerer der logischen Blockschreibbasisadresse und der logischen Blockschreibversatzadresse, die in dem Speicherbefehl enthalten sind, auszuwählen;
die logische Basisadresse, die in dem ausgewählten Basisadressenregister enthalten ist, und die logische Versatzadresse in eine physikalische Adresse innerhalb der NVM-Vorrichtung zu übersetzen; und
auf die Blockdaten an der physikalischen Adresse innerhalb der NVM-Vorrichtung zuzugreifen.

3. Steuereinheit nach Anspruch 2, wobei das Blockfenster (208) konfiguriert ist, eine vorgegebene Blockgröße zu unterstützen und wobei die jeweiligen logischen Basisadressen jeweils konfiguriert sind, einen vorgegebenen Unterblock innerhalb des Blockfensters (208) abzudecken.

4. Steuereinheit nach Anspruch 2 oder 3, wobei der erste Befehl den Speicherbefehl enthält und wobei der mindestens eine interne Prozessor ferner betreibbar ist, das mindestens eine Programm aus dem mindestens einen Speicher auszuführen, um die Blockdaten in die physikalische Adresse innerhalb der NVM-Vorrichtung zu schreiben.

5. Steuereinheit nach Anspruch 2, 3 oder 4, wobei der erste Befehl den Speicherladebefehl enthält und wobei der mindestens eine interne Prozessor ferner betreibbar ist, das mindestens eine Programm aus dem mindestens einen Speicher auszuführen, um die Blockdaten von der physikalischen Adresse innerhalb der NVM-Vorrichtung zu lesen.

6. Computersystem (500), das Folgendes umfasst:
einen Systembus (514);
eine Anzeige (518), die kommunikationstechnisch an den Systembus gekoppelt ist;
mindestens einen flüchtigen Speicher (510), der an den Systembus gekoppelt ist; und
die Steuereinheit nach Anspruch 2, die an den Speicherbus kommunikationstechnisch gekoppelt ist.

7. Computerlesbares Speichermedium, das ausführbare Anweisungen enthält, um auf Blockdaten zuzugreifen, die innerhalb einer nicht flüchtigen Speichervorrichtung - NVM-Vorrichtung - (204) in einem Computersystem gespeichert werden können, wobei das Computersystem mindestens einen Host-Prozessor (101) und mindestens einen Speicherbus (203) enthält, wobei das computerlesbare Speichermedium ausführbare Anweisungen umfasst, um das Verfahren nach Anspruch 1 auszuführen.

## Revendications

1. Procédé d'accès à des données de bloc pouvant être mémorisées dans un dispositif de mémoire non volatile - NVM - (204) dans un système informatique, le système informatique comprenant au moins un processeur hôte (101) et au moins un bus mémoire (203), le procédé comprenant : la réception, au niveau d'un contrôleur (202) sur le bus mémoire, d'au moins une première commande à partir du processeur hôte, la première commande comportant une commande de mémorisation, la première commande comportant en outre une adresse logique, le contrôleur comportant au moins une fenêtre de bloc (208) définissant au moins une plage d'adresses pour accéder aux données de bloc pouvant être mémorisées dans le dispositif NVM ;
la traduction, par le contrôleur, de l'adresse logique incluse dans la première commande en une adresse physique dans le dispositif NVM, l'adresse logique étant conforme à au moins une partie de la plage d'adresses définie par la fenêtre de bloc (208) ; et
l'accès, par le contrôleur, aux données de bloc à l'adresse physique dans le dispositif NVM,
dans lequel le contrôleur comporte en outre au moins un registre de commandes associé à l'au moins une fenêtre de bloc (208) et dans lequel la réception de l'au moins une première commande à partir du processeur hôte comporte la réception de la première commande au niveau du registre de commandes associé à la fenêtre de bloc (208),
**caractérisé en ce que**
l'adresse logique comporte une adresse de base d'écriture de bloc logique et une adresse de décalage d'écriture de bloc logique définissant un décalage relatif par rapport à l'adresse de base d'écriture de bloc logique, dans lequel le contrôleur comporte en outre une pluralité de registres d'adresses de base (0-q) contenant une pluralité d'adresses de base logiques, respectivement, chacune des pluralités d'adresses de base logiques correspondant à une partie prédéterminée de la plage d'adresses définie par la fenêtre de bloc (208), et le procédé comprenant en outre :
en réponse à la commande de mémorisation en mémoire, la sélection d'un registre de la pluralité de registres d'adresses de base en fonction au moins d'une ou plusieurs de l'adresse de base d'écriture de bloc logique et de l'adresse de décalage d'écriture de bloc logique incluses dans la commande de mémorisation en mémoire,
la réception, au niveau du contrôleur sur le bus mémoire, des données de bloc au décalage relatif par rapport à l'adresse de base d'écriture de bloc logique dans la plage d'adresses de la fenêtre de bloc (208),
dans lequel le contrôleur comporte en outre un composant de traduction d'adresses (214) et dans lequel la traduction de l'adresse logique en l'adresse physique dans le dispositif NVM comporte la traduction, par le composant de traduction d'adresses, de l'adresse de base logique contenue dans le registre d'adresses de base sélectionné et de l'adresse de décalage d'écriture de bloc logique en l'adresse physique dans le dispositif NVM.

2. Contrôleur (202) d'accès à des données de bloc pouvant être mémorisées dans un dispositif de mémoire non volatile -NVM - (204), le contrôleur pouvant être couplé en vue de communications à au moins un processeur hôte (101) sur au moins un bus mémoire (203), comprenant :
au moins une fenêtre de bloc (208) définissant au moins une plage d'adresses pour accéder aux données de bloc pouvant être mémorisées dans le dispositif NVM ;
au moins un registre de commandes (0-q) associé à l'au moins une fenêtre de bloc (208), le registre de commandes étant opérationnel pour :
recevoir, sur le bus mémoire, au moins une première commande à partir du processeur hôte, la première commande comprenant une commande de mémorisation, **caractérisé en ce que** la première commande présente une adresse logique comportant une adresse de base logique et une adresse de décalage logique définissant un décalage relatif par rapport à l'adresse de base d'écriture de bloc logique, et le contrôleur étant configuré pour
recevoir, sur le bus mémoire, les données de bloc au décalage relatif par rapport à l'adresse de base d'écriture de bloc logique dans la plage d'adresses de la fenêtre de bloc (208) ;
une pluralité de registres de contrôle (212) comportant au moins une pluralité de registres d'adresses de base (0-q), la pluralité de registres d'adresses de base contenant une pluralité d'adresses de base logiques, respectivement, chacune des adresses de base logiques respectives correspondant à une partie prédéterminée de la plage d'adresses définie par la fenêtre de bloc (208) ; et
au moins un processeur interne (520a) opérationnel pour exécuter au moins un programme provenant d'au moins une mémoire (520b) :
en réponse à la commande de mémorisation, sélectionner un registre de la pluralité de registres d'adresses de base en fonction au moins d'une ou plusieurs de l'adresse de base d'écriture de bloc logique et de l'adresse de décalage d'écriture de bloc logique incluses dans la commande de mémorisation en mémoire ;
traduire l'adresse de base logique contenue dans le registre d'adresses de base sélectionné et l'adresse de décalage logique en une adresse physique dans le dispositif NVM ; et
accéder aux données de bloc à l'adresse physique dans le dispositif NVM.

3. Contrôleur selon la revendication 2 dans lequel la fenêtre de bloc (208) est configurée pour prendre en charge une taille de bloc prédéterminée, et dans lequel les adresses de base logiques respectives sont configurées chacune pour couvrir un sous-bloc prédéterminé dans la fenêtre de bloc (208).

4. Contrôleur selon la revendication 2 ou 3 dans lequel la première commande comporte la commande de mémorisation en mémoire, et dans lequel au moins un processeur interne est en outre opérationnel pour exécuter l'au moins un programme provenant de l'au moins une mémoire pour écrire les données de bloc à partir de l'adresse physique dans le dispositif NVM.

5. Contrôleur selon la revendication 2, 3 ou 4 dans lequel la première commande comporte la commande de chargement en mémoire, et dans lequel au moins un processeur interne est en outre opérationnel pour exécuter au moins un programme provenant de l'au moins une mémoire pour lire les données de bloc à partir de l'adresse physique dans le dispositif NVM.

6. Système informatique (500), comprenant :
un bus système (514) ;
un affichage (518) couplé en vue de communications au bus système ;
au moins une mémoire volatile (510) couplée au bus système ; et
le contrôleur selon la revendication 2 couplé en vue de communications au bus mémoire.

7. Support de mémorisation lisible par ordinateur comprenant des instructions exécutables pour accéder à des données de bloc pouvant être mémorisées dans un dispositif de mémoire non volatile - NVM - (204) dans un système informatique, le système informatique comprenant au moins un processeur hôte (101) et au moins un bus mémoire (203), le support de mémorisation lisible par ordinateur comprenant des instructions exécutables pour exécuter le procédé selon la revendication 1.
